# EUROPEAN PATENT APPLICATION

(11) **EP 1 277 656 A1**
(43) Date of publication of application: **22.01.2003**
(21) Application number: 02254771.5
(22) Date of filing: 08.07.2002
(51) Int. Cl.: B65B 5/10, B65G 47/52, B65B 35/12

(54) **Packaging system for light-weight packages**

(30) Priority: 18.07.2001 GB 0117504
(71) Applicant: ISHIDA EUROPE LIMITED, Birmingham B32 3DB (GB)
(72) Inventor: Bennett, Robert, Ishida Europe Ltd., Birmingham, B32 3DB (GB)
(74) Representative: Stuart, Ian Alexander

(57) **Abstract**

Articles to be packed are fed to a receiving and dropping assembly. This includes a pair of doors (30) which are displaceable between a holding configuration and a dropping configuration. In the holding configuration the doors (30) define a receptacle which is open at an input side and closed at an opposite side, and which defines a supporting surface. A pair of opposed guide surfaces extend away from the input side with a decrease in spacing. The receptacle preferably narrows downwardly. The doors (30) pivot apart and allow an article supported by the supporting surface to drop onto a conveyor from which it may be picked by a robot arm. This may be actuated by a servo motor which rotates a threaded shaft thereby displacing a threaded element mounted on the shaft.

## Description

The present invention relates to a packaging system, particularly for packaging articles in trays or boxes, and to components thereof which may be of wider utility. It is particularly concerned with the packaging of lightweight articles such as bags of crisps and other snack foods.

At present, bags of crisps and the like are produced with a high degree of automation. It is then often desired to place bags in shallow trays or boxes, suitable for display at point of sale. Single boxes may be intended to receive a controlled mixture of different products (e.g. different crisp flavours). At present, the loading of such boxes has to be done by hand.

There are particular problems about the automatic handling of light packages. When a light article such as a packet of crisps is travelling at speed, e.g. along a conveyor, it is very difficult to apply any force to adjust its orientation. Anything that applies a slight force is liable to send the article spinning off the conveyor.

Broadly, in a first aspect the present invention provides a packaging system having an inlet for receiving articles (such as packets of snacks), typically delivered by a conveyor system; means for placing articles on a conveyor line in a controlled configuration; means for causing articles to be conveyed along the conveyor line in predetermined arrays; and means for picking articles or arrays of articles from the conveyor line and placing them in receptacles.

Preferably the means for placing articles on the conveyor line comprise a receiving and dropping station having means to receive an article and, if necessary, adjust its orientation, prior to dropping it onto the conveyor line. The receiving and dropping station may employ a "bomb door assembly" having a hinged pair of bomb doors movable from a closed configuration in which they define a supporting floor, to an open configuration in which they allow an article to drop. The bomb doors are preferably tapered in two senses, narrowing downwardly and inwardly (in the direction in which an article passes into the receiving station). The tapering and shaping is arranged so that an article arriving in an incorrect orientation is correctly re-oriented. Thus when the doors open, it drops properly onto the conveying line beneath.

The two bomb doors are preferably controlled by a common drive crank to which they are connected by links arranged so that the doors can be opened abruptly, to allow an article to fall unimpeded. The common drive crank may be controlled by a rotary actuator.

The arrival of an article at the receiving and dropping station may be detected automatically, e.g. using a photocell.

This may send a signal to a first microprocessor which controls the operation of the receiving and dropping station and the conveying line.

There may be means for causing articles to be conveyed along the output conveyor in predetermined arrays, e.g. shingled arrays. The means may involve control of the operation of the bomb doors of the dropping station, generally in conjunction with control of the output conveyor. Alternatively or additionally, the conveying line may comprise two in-line conveyors: a first (generally short) one, which receives articles from the receiving station, and a second conveying line which receives articles from the first line. Their operations may be controlled so that articles can be placed on the second conveying line in desired arrays, e.g. shingled groups of three, four or five articles.

Preferably a box/tray conveyor runs parallel with the conveying line, adjacent to it. It preferably runs in the opposite direction. There is preferably a tray detector (e.g. using a photocell) for detecting when a tray arrives in a loading region.

For transferring articles from the conveying line to a tray, there is a pick-and-place robot assembly. This supports a pickup device, which it moves with three axes of motion.

The pickup device is preferably a suction device having a lower grille through which air can be sucked to provide suction capable of lifting one or more articles.

The suction is controllable, e.g. by means of gate means movable to obstruct the air flow. Thus, there can be a constantly-running fan.

The robot device may comprise a carriage capable of displacement along a rail parallel to the conveying direction. The carriage supports a forwardly-directed linear actuator, to which the pickup device is connected. The forwardly-directed linear actuator device is pivotally mounted about a horizontal axis extending in the conveying direction, and it is pivotable about this by means of a vertical linear actuator device. These three displacement devices (two linear actuators and the displaceable carriage) are controlled (e.g. by the first or by a second microprocessor) so as to permit coordination of their operations to achieve any desired motion of the pickup assembly. If this uses a second microprocessor it preferably communicates with the first microprocessor so that it "knows" when and where an array of articles will be ready to be picked up.

In operation of a preferred embodiment, a first detector detects an article entering the bomb door assembly. This synchronizes the operation of the bomb doors, and signals the first microprocessor which causes the conveying line to operate to handle the article dropped by the bomb doors in the desired fashion, e.g. to produce a shingled array of three articles conveyed on the second conveying line. The detector also sends a signal to the second microprocessor (or to the first microprocessor if that carries out both functions) which controls the robot. This also receives a signal from the first microprocessor, relating to the operation of the conveying line. Thus the second microprocessor "knows" the nature of the array being sent along the conveying line, and when it will arrive in the region of the robot. It also receives information from the tray detector. It "knows" that a tray is at the detector at a particular time, and it knows the speed at which the tray moves. It likewise knows the position and speed of the array of articles. It can therefore cause the robot to operate so that the pickup device picks the array (or part thereof) from the conveying line (which may be stopped to facilitate this). It then assesses whether a box is at a suitable location. If it is, then it moves the pickup so that the articles can be deposited in the tray. If not, then the robot returns to a "home" position, from which it moves once there is a box in a suitable position.

In a second aspect the invention provides a receiving and dropping station comprising a bomb door assembly of the above type. It may also include a conveyor for conveying articles to the bomb door assembly, preferably disposed so that an article about to pass from the conveyor to the bomb door assembly is at a higher level than an article received in the bomb door assembly and ready to be dropped thereby.

In a third aspect the invention provides an actuator assembly which may be used in the robot device. Preferably the assembly comprises an actuator for a robot arm comprising a servomotor, a threaded shaft coupled to the servomotor for rotation thereby, and a threaded element mounted on the shaft so as to be displaceable by rotation thereof.

In further aspects the invention relates to methods of operating apparatus according to the preceding aspects. It particularly relates to methods for handling articles in the form of pillow packs, namely packs such as crisp packets having enclosures formed of thin material. Such an enclosure has a seal region (and, usually, a pair of such seal regions, generally corresponding to the top and bottom of the packet). A seal region is relatively stiff and flat and can thus be used for guiding a pack. Preferably packs are conveyed to a bomb door assembly so as to present a seal region to it. Preferably the door assembly has opposed guide regions dimensioned to guide a seal region into the door assembly, correcting any minor misalignment. Preferably the guide regions (generally defined by guide creases) extend horizontally at a level slightly below the adjacent conveyor level. Thus the packs are conveyed into the bomb door assembly at a height and speed so that the trajectory of the bag entering the door assembly is such that the front edge of the bag dips down and the seal portion of the bag hits the guiding crease in the doors. This guides the leading edge of the bag into the door. Because the trailing edge is still clear of the door, this also realigns as it settles down into the door profile. This process allows correction of the alignment of bags which may enter into the doors displaced off centre to the line of travel and/or twisted off square to the mechanism. The bags after alignment preferably come to rest for a few milliseconds before dropping, to stabilize. If the bag is not arrested prior to dropping there may be a lateral movement as the bag falls, resulting in a poor presentation on the collation belt below.

The door opening geometry is also important as the doors must open in such a way as to discharge the bag cleanly, preferably so that the bag does not touch the doors again as it drops. The bag must effectively be left in space when the doors open This can give a very repeatable drop which in turn gives accurate collations to be formed for the pick up head.

This assembly can also be used to respace bags being fed from a source which may be intermittent; or a source which supplies a flow of bags on a variable mark space ratio. The bomb door can be programmed to smooth out these variances so that a constant stream of bags is presented after the bomb door. This again assists the pick and place system to work at very high efficiency without the need for high tech camera systems. Also, when bags are presented this way, the process of picking and placing is optimised, allowing for higher pick rates because of reduced placement distances and the fact that the pick up head can readily find the collation or bag.

An embodiment of the invention will now be described in more detail with reference to the accompanying drawings in which:
Fig. 1 is a front elevation of apparatus embodying the invention;
Fig. 2 is a top plan view of the apparatus shown in Fig. 1;
Fig. 3 is a vertical section on A-A in Fig. 2;
Fig. 4 is a front elevation on a larger scale of the bomb door assembly of the apparatus; and

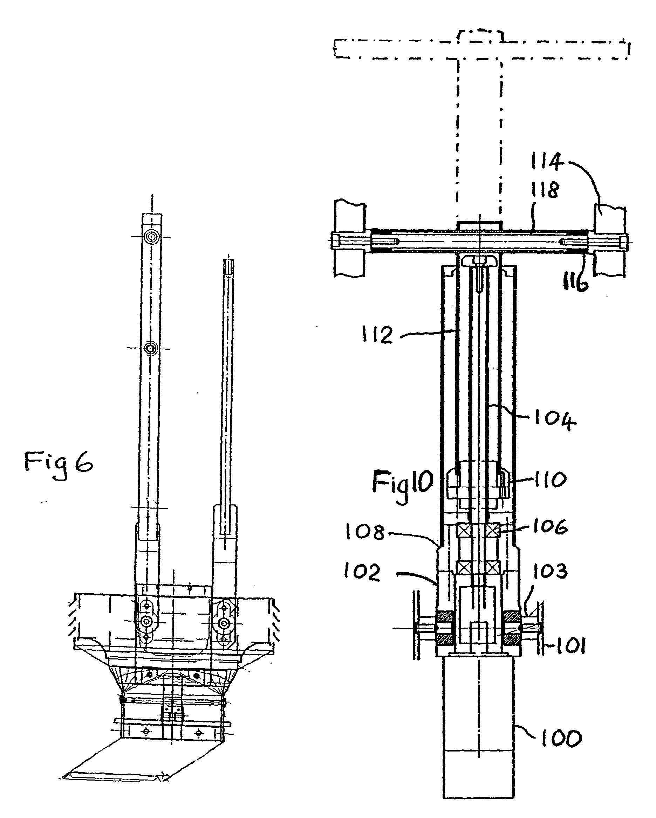

Figs. 5 and 6 are front and side elevations of the pickup assembly of the apparatus;
Fig. 7 is a top plan view of a bomb door assembly including associated conveyors;
Fig. 8 is a front elevation of the bomb door assembly; and
Fig. 9 is a side elevation of the bomb door assembly; and
Fig. 10 is a section through an actuator assembly.

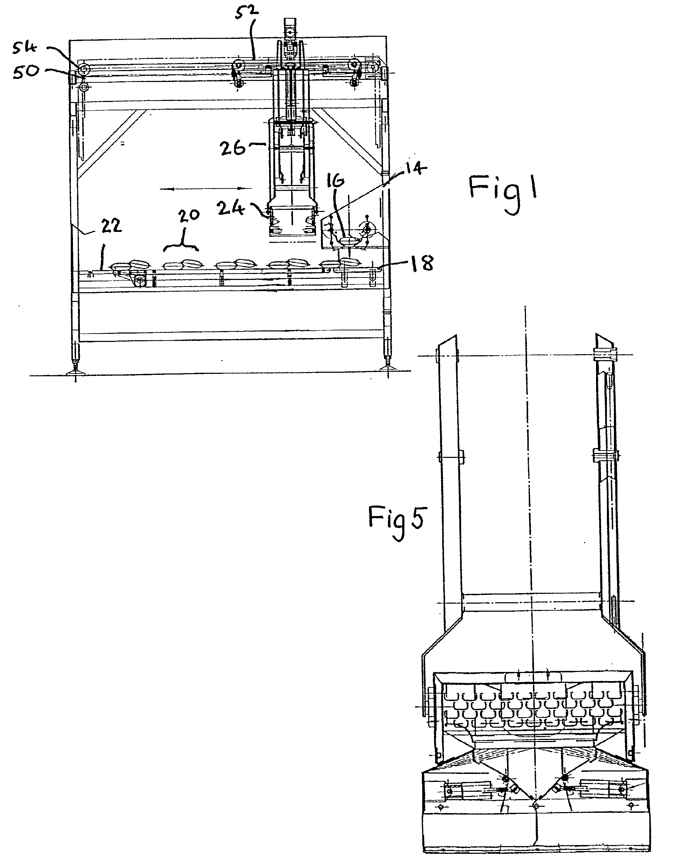

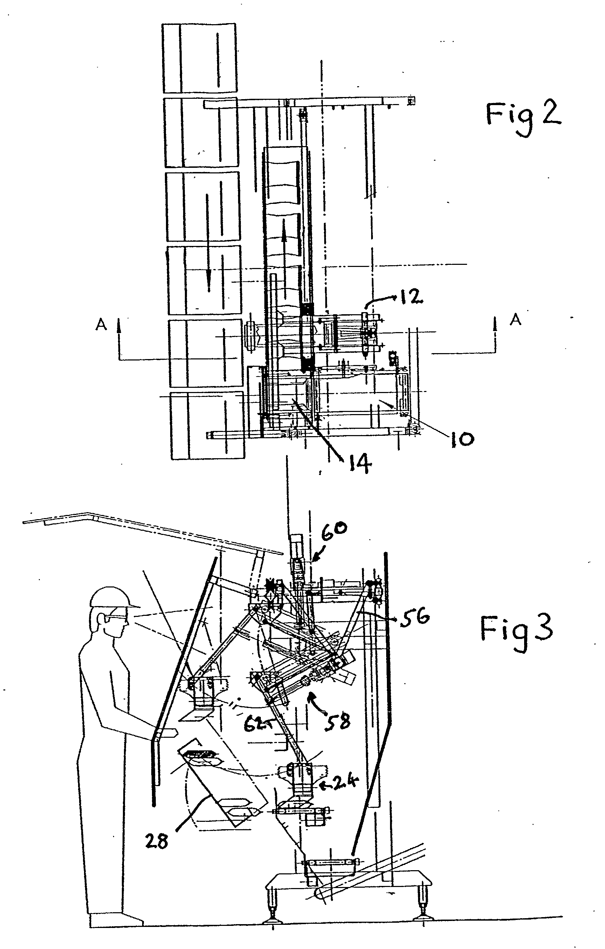

The drawings show apparatus being used for packaging articles which are packets of snack foods such as crisps. The packets are delivered via an infeed conveyor 10 (see Fig. 2). A photocell device 12 detects the arrival of a packet. An individual packet is delivered to a bomb door assembly 14. From here, a packet 16 is dropped a short distance onto a short conveyor belt 18. This runs intermittently, under the control of a microprocessor which receives signals from the sensor 12 and also controls the operation of the bomb doors 14. The intermittent operation of the first conveyor 18 is controlled so that successive packets 16 are assembled into desired arrays. In Fig. 1, these arrays are shown as shingled pairs 20. The arrays 20 are conveyed on a main conveyor belt 22. This also has a controlled intermittent operation, so that an array of packets is conveyed to a pickup location whence it is picked up while the conveyor 22 is stationary. The picking up is effected by a pickup device 24 mounted on a robotic carrier 26. This carries the array of packets to a box or tray 28 which is conveyed on a parallel conveyor.

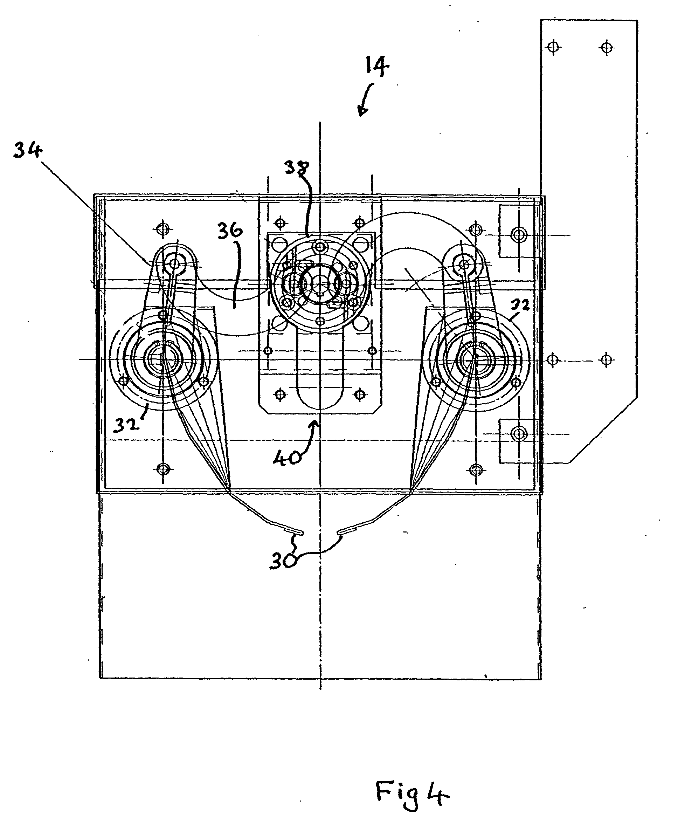

The bomb door assembly 14 is shown in more detail in Figs 4 and 7 - 9. A pair of mirror-image doors 30 are pivotally mounted via bushings 32 so they are pivotable from a closed configuration, in which they define a generally U-shaped floor, to an open configuration. For this purpose, each bushing is fast with a short arm 34 which is pivoted to a respective C-shaped link 36, which is pivoted to a rotatable disc 38 fast with a rotary actuator 40. The arrangement is such that rotation of the actuator 40 causes rapid opening of the doors 30, their motion approximating to simple harmonic motion. In the illustrated apparatus the doors are coupled together for motion. Alternatively they could be independently movable.

The doors 30 are shaped so that, in the closed configuration shown in Fig. 4, they define a space which tapers downwardly and forwardly. The downward tapering, visible in Fig. 4, is via a series of angles. The lower region may, in fact, define a horizontal floor. The tapering in both directions is designed so that a packet coming into the doors from the infeed conveyor 10 will come to rest in the correct position and orientation. Then when the doors open, it will fall properly onto the conveyor 18 beneath.

The doors are shaped and mounted so that in the closed position they have a pair of spaced crease regions 130 which extend horizontally, suitably spaced to guide a packet 16, primarily by engaging a leading seal region thereof. The mouths of the crease regions (adjacent the infeed conveyor 10) splay out, but the bulk of the creases is straight. The creases 130 are at a level slightly below the level of the infeed conveyor 10.

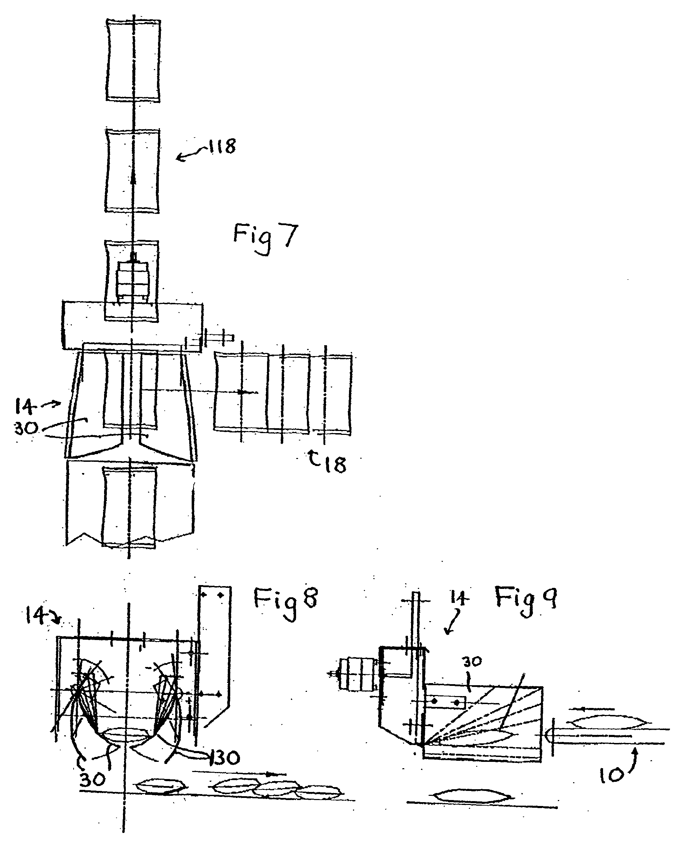

Fig. 7 shows that the outfeed conveyor onto which articles are dropped by the bomb door assembly may be a lateral conveyor 18 as shown in Figs. 1 - 3 or it may be at another orientation, e.g. an in-line conveyor 118.

Above the conveyors 18,22, there is a parallel rail 50 on which a carriage 52 travels, driven by a belt and pulley system 54. This carriage forms part of the robot system. It carries a pivotable arm 56 which is pivotally connected to the rear end of a forwardly directed piston and cylinder assembly or actuator 58. An intermediate region of this assembly 58 is coupled to a vertically acting piston and cylinder assembly or actuator 60. Thus, the vertically acting assembly 60 can cause the forwardly directed assembly 58 to pivot in the plane of Fig. 3. The forwardly directed assembly 58 carries an arm 62 on which the pickup assembly 24 is mounted. Operation of the two piston and cylinder assemblies 58,60 and movement of the carriage 52 (which together provide three axes of movement) are controlled by a microprocessor. This can cause the pickup head to move to any position within its range. In particular, it can be moved so that it lowers towards the conveyor belt 22 for picking packets off it at any position within a predetermined range. It can then move forwardly, to place the packets in a box carried on the box conveyor. The second microprocessor uses data on the speed and position of a box and the speed, position and nature (such as n-packet shingled array) of an article or array of articles to compute optimum paths for the pickup assembly to be caused to follow, in picking up articles and placing them at correct locations in a box and/or moving to a home position at which is caused to stay until it is computed that it is time to move to a calculated box position or to a calculated array picking-up position.

Fig. 10 shows a preferred form of actuator assembly for the robot system. This employs a servomotor 100 which is secured into a motor housing 102. This is mounted to a fixed frame 101, in this example pivotally, via a motor pivot 103. The servomotor acts to rotate an actuator screw 104. The coupling is indirect, via a flexible coupling employing a pair of angular contact bearings 106 housed in a bearing housing 108 fixed to the motor housing 102.

The actuator screw 104 bears an actuator screw nut 110 which is axially displaceable by rotation of the screw 104. It is attached to a thrust tube 112, which is pivotally connected to a movable frame 114 via pivot bushes 116 and a pivot shaft 118. In operation, rotation of the motor 100 in either sense causes the actuator nut 110 to move axially along the screw 104 in a corresponding direction. The thrust tube 112 is moved with it, thus increasing the distance between the motor pivot 103 and the pivot shaft 118 associated with the remote end of the thrust tube 112.

This type of actuator can give a robust and efficient system, very suitable for use in a robotic system as described herein. Preferably the actuators are positioned outside the support and swinging members. This facilitates maintenance and makes the system very efficient, allowing light low power drives to be used without the need for costly gearboxes.

The resulting robot arm employing such an actuator can be very fast, compared with existing robotics (cast type paint robots and x-y robots). This is due to the efficiency of the actuator combined with the fact that the actuator and framework move much less than the pickup head. The system is similar to a human leg with the muscles working beside the bone-supporting framework.

## Claims

1. A receiving and dropping assembly comprising a pair of doors (30) which are displaceable between a holding configuration and a dropping configuration, the doors (30) being constructed and arranged so that in the holding configuration they define a receptacle which is open at an input side and closed at an opposite side, and which defines a supporting surface and a pair of opposed guide surfaces which extend away from the input side with a decrease in spacing; displacement to the dropping configuration allowing an article supported by the supporting surface to drop.

2. An assembly according to claim 1 wherein the doors are pivotally displaceable.

3. An assembly according to claim 1 or claim 2 wherein in the holding configuration the width of the receptacle decreases downwardly.

4. An assembly according to claim 1, 2 or 3 including an input conveyor (10)arranged to feed articles into the input side of the receptacle at a level higher than the supporting surface.

5. A method of feeding packages by means of an assembly according to claim 4 wherein packages each having a leading edge and a trailing edge are fed successively by the input conveyor into the receptacle, the level and spacing of the conveyor relative to the receptacle being such that the leading edge of a package commences to be guided by the guide surfaces when the trailing edge is still being conveyed by the conveyor.

6. A method according to claim 5 wherein each package comes to rest momentarily in the receptacle before the doors move to drop it.

7. A method according to claim 6 wherein the dwell time of each package in the receptacle is selected to vary the mark-space ratio or variation in package spacings in the flow of packages.

8. A packaging system having a receiving and dropping assembly according to any of claims 1-4; an output conveyor line (18, 22) for receiving articles dropped by said assembly; means for causing articles to be conveyed along the output conveyor line in predetermined arrays; and means (14) for picking articles or arrays of articles from the conveyor line and placing them in receptacles.

9. A packaging system according to claim 8 wherein the output conveyor line comprises:
a first conveyor (18) which receives articles from the receiving and dropping assembly, and a second conveyor (22) which receives articles from the first conveyor, the two conveyors being independently controllable so that articles can be placed on the second conveying line in desired arrays.

10. A packaging system according to claim 8 or 9 wherein said means for causing articles to be conveyed in predetermined arrays comprises control means for controlling the displacement of the doors.

11. A packaging system according to claim 10 wherein said control means also controls the output conveyor line.

12. A packaging system according to any of claims 8 to 11 including a box/tray conveyor in parallel with and adjacent to the output conveyor line.

13. A packaging system according to any of claims 8 to 12 wherein said means for picking articles or arrays comprises a pick-and-place robot system having a plurality of axes of independent displacement, at least one of which employs a robot arm actuable by an actuator comprising a servomotor, a threaded shaft coupled to the servomotor for rotation thereby, and a threaded element mounted on the shaft so as to be displaceable by rotation thereof.
